# EUROPÄISCHE PATENTANMELDUNG

(11) **EP 2 261 515 A1**
(43) Veröffentlichungstag der Anmeldung: **15.12.2010**
(21) Anmeldenummer: 09006524.4
(22) Anmeldetag: 14.05.2009
(51) Int. Cl.: F16B 15/02, F16B 15/08

(54) **Nagel zum Einsatz im Trockenbau**

(71) Anmelder: Raimund Beck Nageltechnik GmbH, 5270 Mauerkirchen (AT)
(72) Erfinder: Siemers, Stefan Dipl.-Ing., 84489 Burghausen (DE); Lindlbauer, Christian, 5273 Rossbach 53 (AT)
(74) Vertreter: Paul, Dieter-Alfred

(57) **Zusammenfassung**

Die Erfindung betrifft ein Befestigungsmittel (1), insbesondere Nagel zum Einsatz im Trockenbau, das einteilig aus einem flächigen Rohmaterial durch Stanzen und/oder Schneiden und Biegen gebildet ist, mit einem Schaft (2), an dessen einem Endbereich eine Spitze (3) und an dessen anderem Endbereich ein im wesentlichen senkrecht zur flächigen Erstreckung des Schaftes (2) umgebogener Kopf (4) ausgebildet sind, wobei Abschnitte (5) des Kopfes (4) beidseitig einer beim Umbiegen des Kopfes (4) gebildeten Biegelinie (6) über den Schaft (2) vorstehen.

## Beschreibung

Die vorliegende Erfindung betrifft ein Befestigungsmittel, insbesondere einen Nagel zum Einsatz im Trockenbau, das einteilig aus einem flächigen Rohmaterial durch Stanzen und/oder Schneiden und Biegen gebildet ist, mit einem Schaft, an dessen einem Endbereich eine Spitze und an dessen anderem Endbereich ein im Wesentlichen senkrecht zur flächigen Erstreckung des Schaftes umgebogener Kopf ausgebildet sind. Des weiteren betrifft die Erfindung einen Nagelstreifen mit mehreren über Befestigungsstege miteinander verbundenen erfindungsgemäßen Befestigungsmitteln sowie ein Verfahren zur Herstellung eines erfindungsgemäßen Befestigungsmittels bzw. eines erfindungsgemäßen Nagelstreifens.

Befestigungselemente bzw. Nagelstreifen der oben genannten Art sind bereits bekannt und beispielsweise im Dokument DE 30 02 321 A1 beschrieben. Das Dokument zeigt einen aus einem dünnen Blech mittels Stanzen und Biegen hergestellten Nagel bzw. ein Nagelband, welches mehrere erfindungsgemäße Nägel umfasst, die über Verbindungsstege miteinander verbunden sind. Zur Herstellung wird der Nagel zunächst aus dem dünnen Blech herausgestanzt und eines der Enden des Nagels gleichzeitig oder im Anschluss seitlich gebogen, um einen seitlich ausgerichteten Nagelkopf zu bilden.

Dieser Nagel hat gegenüber den auf herkömmliche Weise aus einem gezogenen oder gewalzten Draht hergestellten Nägeln zwar den Vorteil, dass zur Bereitstellung der notwendigen Nageloberfläche eine geringere Materialmenge notwendig ist, so dass sich sowohl das Gewicht des Nagels als auch die Materialkosten verringern, jedoch eignet sich der Nageltyp nur bedingt zur Verwendung in einem Nagelsetzgerät.

Dies liegt daran, dass aufgrund der seitlichen Ausrichtung des Nagelkopfes das Risiko eines Verkippens des Nagels in dem Nagelsetzgerät durch ein bei der Belastung des Nagelkopfes auf den Nagel wirkendes Drehmoment relativ groß ist. Die seitliche Ausrichtung des Nagelkopfes hat ferner den Nachteil, dass es nicht möglich ist, eine zum Setzen des Nagels notwendige Kraft so aufzubringen, dass deren Kraftrichtung nahezu vollständig mit der Längserstreckung des Nagelschaftes übereinstimmt. Als Folge kann Biegemomenten insbesondere bei Belastung des dem Nagelschaft abgewandten Endes des Nagelkopfes nur unzureichend Rechnung getragen werden.

Ferner hat dies zur Folge, dass zur Einbringung des Nagels in dem zu bestückenden Bauteil eine größere Gesamtkraft auf den Nagelkopf im Vergleich zu herkömmlichen Nägeln aufgebracht werden muss und der Nagel oder die Schraube hinsichtlich der Festigkeit entsprechend auszulegen ist.

Es ist daher Aufgabe der vorliegenden Erfindung, ein Befestigungsmittel bereitzustellen, welches einfach und kostengünstig mit möglichst wenigen Verfahrensschritten herstellbar ist und gleichzeitig eine homogene Einbringung der Setzkraft auf den Schaft ermöglicht, so dass das Befestigungsmittel sich auch für den Einsatz in Nagelsetzgeräten eignet.

Diese Aufgabe wird erfindungsgemäß dadurch gelöst, dass Abschnitte des Kopfes beidseitig einer beim Umbiegen des Kopfes gebildeten Biegelinie über den Schaft vorstehen.

Mit anderen Worten wird durch die erfindungsgemäße Ausbildung des Kopfes und eine Erstreckung des Kopfes beidseitig der flächigen Erstreckung des Schaftes das Auftreten von Biegemomenten vermindert bzw. je nach Ausbildung der Abschnitte sogar gänzlich verhindert, da die aus der Setzkraft resultierende Kraftrichtung mit der Ausrichtung des Schaftes im Wesentlichen in Übereinstimmung gebracht werden kann.

Der Kopf kann so ausgebildet sein, dass er den Schaft sowohl beidseitig der flächigen Erstreckung des Schaftes als auch quer dazu überragt.

Weist der Kopf eine im Wesentlichen kreisförmige Querschnittsfläche auf, die zentrisch zum Schaft angeordnet ist, so können Biegemomente bei einem Aufbringen der Setzkraft auf den Nagelkopf sogar vollständig eliminiert werden, was zu einem gleichmäßigen Einbringen des Nagels in das zu bestückende Bauteil führt und ferner erlaubt, die auf den Kopf des Befestigungsmittels aufzubringende Kraft so klein wie gerade notwendig zu wählen. Dies hat den Vorteil, dass die Abmessungen des Befestigungsmittels ebenfalls entsprechend reduziert werden können, da es beim Setzen des Nagels geringeren Kräften ausgesetzt ist, was automatisch zu einer Reduktion der Materialkosten und des Gewichtes führt.

Um eine entsprechende zentrische Anordnung des Kopfes zum Schaft realisieren zu können, sind Einschnitte insbesondere in der Verlängerung des Schaftes an dem Kopf vorgesehen, zwischen deren Endbereichen sich eine zwischen Kopf und Schaft gebildete Biegelinie erstreckt.

Mit einem solchen Aufbau wird es möglich, durch einen einfachen einstufigen Biegevorgang ein Befestigungsmittel mit einem zentrisch zum Schaft angeordneten Kopf bereitzustellen. Da lediglich eine einzige Biegelinie in das flächige Rohmaterial eingebracht werden muss, um ein erfindungsgemäßes Befestigungsmittel herzustellen, ist die Fertigung auch besonders einfach in einem einstufigen Prozeßschritt zu realisieren.

Es ist somit möglich, durch einen einzigen Biegevorgang, d.h. im Sinne der Erfindung durch eine Biegung um einen einzigen Biegepunkt bzw. eine einzige Biegelinie ohne Umkehr der Biegerichtung den Kopf senkrecht zum Schaft auszurichten und dabei mit einer beliebigen Querschnittsfläche zu versehen. Natürlich ist es möglich, einen Endbereich an mindestens einem Abschnitt des Kopfes eine weitere Biegelinie vorzusehen, um die der Endbereich relativ zum Kopf (4) gebogen ist. Die Endabschnitte können dabei ohne Wechsel der Biegerichtung so umgebogen werden, dass sie beim Einsetzen in das zu bestückende Bauteil in die Bauteiloberfläche eindringen, und können so eine weitere Verdrehsicherung des Befestigungsmittels in dem Bauteil bereitstellen.

Zur Variation der Ausgestaltung der Querschnittsfläche des Kopfes ist es lediglich notwendig, das Stanzwerkzeug entsprechend der gewünschten Außenkontur auszubilden. So lassen sich alle möglichen geometrischen Querschnittsflächen wie beispielsweise im wesentlichen rechteckige, kreisförmige oder kegelförmige Querschnittsflächen oder aber auch zu dekorativen Zwecken in Form von Tieren oder Sterne oder auch Herzen erstellen.

Das Befestigungsmittel weist eine Aussparung in dem Kopf auf, deren Abmessungen durch die Biegelinie und die Ausbildung der Einschnitte definiert sind. Dabei kann die Kontur der Aussparung im Wesentlichen der Außenkontur zumindest eines Abschnittes des Schaftes im Bereich unterhalb des Kopfes entsprechen.

In einem Ausführungsbeispiel sind die Einschnitte und damit die Ausbildung der Aussparung in dem Kopf so gewählt, dass der Schaft und die Spitze vollständig durch das aus dem Befestigungskopf umgebogene Material gebildet ist.

Natürlich ist es auch möglich, die Einschnitte so zu wählen, dass die Außenkontur des Schaftes von der Form der Aussparung abweicht.

In einem Ausführungsbeispiel der vorliegenden Erfindung wird die Stanz- bzw. Schneidlinie des Stanz- bzw. Schneidwerkzeuges so gewählt, dass der Kopf zur Vermeidung einer Beschädigung einer dem Kopf zugewandten, mit dem Befestigungsmittel zu bestückenden Bauteiloberfläche abgeschrägt ausgebildet ist. Eine solche Abschrägung kann durch eine geeignete Wahl der Stanz- bzw. Schnittführung erreicht werden. Dadurch kann verhindert werden, dass eine beispielsweise bei Gipskartonplatten vorgesehene Papieroberfläche beim Einbringen des Befestigungsmittels im Bereich des auffliegenden Kopfes durchtrennt wird oder einreißt.

In einem weiteren Ausführungsbeispiel der vorliegenden Erfindung sind an dem Befestigungsmittel im Bereich des Schaftes Vorsprünge, insbesondere Verzahnungen vorgesehen, um die Auszugswerte des Befestigungsmittels zu erhöhen.

Das Befestigungsmittel kann ein Nagel oder eine Schraube oder einen Kombination daraus, ein sogenannter Schraubnagel sein. Es kann aus einfachem Baustahl, aus Federstahl oder aber auch aus einem Kunststoff hergestellt sein. Andere Stahlsorten sind auch möglich. Das Material kann auch einer Wärmebehandlung unterzogen sein.

Um eine eventuell gewünschte federnde Eigenschaft des Befestigungsmittels zu unterstützen, kann in einem weiteren Ausführungsbeispiel der Schaft geschlitzt ausgeführt oder mit einer Bohrung versehen sein. Bei einem solchen Ausführungsbeispiel beruht das Prinzip des Befestigungsmittels in seiner geschlitzten Form auf dem Prinzip eines Spannstiftes gemäß DIN 1481. Das Befestigungsmittel hat in diesem Fall im Durchmesser ein Übermaß bezogen auf die in das Bauteil eingebrachte Bohrung. Beim Eintreiben des Befestigungsmittels wird der Schaft zusammengedrückt, wodurch sich sein Durchmesser zunächst der Bohrung anpasst. Die Rückstellkraft des Schaftes stellt eine Presspassung zwischen Schaft und Wandungen der Bohrung in dem zu bestückenden Bauteil her, was die Auszugswerte des Befestigungsmittels weiter erhöht.

In einem weiteren Ausführungsbeispiel ist die Spitze des Befestigungsmittels nicht angeschliffen. Dies führt dazu, dass von der Spitze verdrängtes Material der zu verbindenden Bauteile wie beispielsweise Gipskarton mit einer Blockkonstruktion im Trockenbau nicht wie im Stand der Technik üblich ausgestanzt wird. Statt dessen wird das Material aufgeschnitten, wobei sich das durchtrennte Blech seitlich an den Schaft anlehnt und somit dem Befestigungsmittel als zusätzlicher Halt dient und so die Auszugswerte weiter verbessert, da sich das Blech federnd gegen die Zacken des Befestigungsmittels legt. Es entsteht ferner kein zu entsorgender, die Umgebung des Bauteils verschmutzender herausgeschnittener Abfall.

Aufgrund des einfachen Aufbaus des erfindungsgemäßen Befestigungsmittels ist es auch möglich, einen erfindungsgemäßen Nagelstreifen für ein Nagelsetzgerät, welcher einteilig aus einem flächigen Rohmaterial durch Stanzen und/oder Schneiden und Biegen aus mehreren, über mindestens einen durchtrennbaren Steg miteinander verbundenen, erfindungsgemäßen Befestigungsmitteln gebildet ist, aus Stahl fertig magaziniert in einem einstufigen Produktionsprozess herzustellen.

Um ein erfindungsgemäßes Befestigungsmittel, insbesondere einen Nagel mit einem Schaft herzustellen, an dessen einem Endbereich eine Spitze und an dessen anderem Endbereich ein im Wesentlichen senkrecht zur flächigen Erstreckung des Schaftes umgebogener Kopf ausgebildet sind, wobei das Befestigungsmittel einstückig aus einem flächigen Rohmaterial gebildet wird, wird erfindungsgemäß vorgeschlagen eine Außenkontur des Befestigungsmittels aus dem flächigen Rohmaterial auszustanzen/auszuschneiden, Einschnitte insbesondere in Verlängerung zur Außenkontur des Schaftes in das Befestigungsmittel einzubringen und das Befestigungsmittel im Bereich der Einschnitte nach oder während des Einbringens der Einschnitte derart umzubiegen, dass sich der Kopf im Wesentlichen senkrecht zum Schaft erstreckt, so dass Abschnitte des Kopfes beidseitig einer beim Umbiegen des Kopfes zwischen Endbereichen der Einschnitte gebildeten Biegelinie über den Schaft vorstehen.

Eine vorteilhafte Ausführungsform des erfindungsgemäßen Verfahrens sieht vor, die Einschnitte so einzubringen, dass sich der Kopf nach dem Umbiegen zentrisch zum Schaft erstreckt. Dies kann beispielsweise dadurch erreicht werden, dass die Einschnitte parallel zu den Seitenflächen des Schaftes in den Bereich des Kopfes eingebracht werden und sich dabei von der Außenfläche bis zu einer durch die flächige Erstreckung des Schaftes gebildeten Ebene hin erstrecken.

Natürlich ist es auch möglich, in einem einstufigen Verfahren einen ganzen Nagelstreifen mit mehreren erfindungsgemäßen Nägeln herzustellen, indem mehrere über Stege miteinander verbundenen Befestigungsmittel sowie die verbindenden Stege gleichzeitig aus dem flächigen Rohmaterial ausgestanzt/ausgeschnitten werden, Einschnitte insbesondere in Verlängerung mit der Außenkontur der jeweiligen Schäfte in die Befestigungsmittel eingebracht werden und die Befestigungsmittel im Bereich der Einschnitte nach oder während des Einbringens der Einschnitte derart umgebogen werden, dass sich die Köpfe jeweils im Wesentlichen senkrecht zu den Schäften erstrecken, wobei Abschnitte der Köpfe jeweils beidseitig einer beim Umbiegen der Köpfe zwischen Endbereichen der Einschnitte gebildeten Biegelinie über die Schäfte vorstehen.

Auch hier ist es möglich, durch geeignete Schnittführung die Einschnitte so auszubilden, dass sich die Köpfe nach dem Umbiegen jeweils zentrisch zu den Schäften erstrekken.

Hinsichtlich weiterer vorteilhafter Ausgestaltungen der vorliegenden Erfindung wird auf die Unteransprüche sowie die Erläuterungen in der nachfolgenden Figurenbeschreibung verwiesen. Es zeigen:
- Figur 1: eine perspektivische Darstellung eines erfin- dungsgemäßen Befestigungsmittels;
- Figur 2: eine Draufsicht des erfindungsgemäßen Befesti- gungsmittels gemäß Figur 1;
- Figur 3: ein in ein beim Trockenbau üblicherweise ver- wendetes Profil eingesetztes Befestigungsmittel gemäß der Figuren 1 und 2;
- Figur 4: eine perspektivische Darstellung eines erfin- dungsgemäßen Nagelstreifens;
- Figur 5: eine schematische Darstellung des fertigungs- technischen Ablaufs des Kopfformens eines er- findungsgemäßen Befestigungsmittels gemäß der Figuren 1 und 2; und
- Figur 6: eine schematische Darstellung der Herstellung eines erfindungsgemäßen Nagelstreifens.

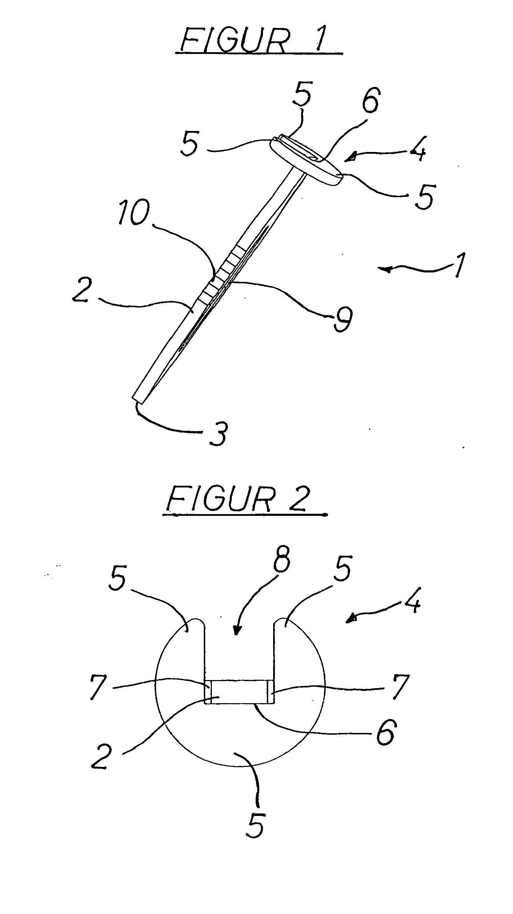

Die Figur 1 zeigt ein erfindungsgemäßes Befestigungsmittel 1, hier in der Form eines Nagels, zum Einsatz im Trockenbau.

Der Nagel 1 ist einteilig aus einem flächigen Rohrmaterial durch Stanzen oder Schneiden und Biegen gebildet. Er weist einen Schaft 2 auf, an dessen einem Endbereich eine Spitze 3 und an dessen anderem Endbereich ein im Wesentlichen senkrecht zur flächigen Erstreckung des Schaftes 2 umgebogener Kopf 4 ausgebildet sind. Der Kopf 4 weist Abschnitte 5 auf, die beidseitig einer beim Umbiegen des Kopfes 4 gebildeten Biegelinie 6 über den Schaft 2 vorstehen.

Wie in Figur 2 näher zu sehen ist, weist der Kopf 4 eine im Wesentlichen kreisförmige Querschnittsfläche auf, die zentrisch zum Schaft 2 ausgerichtet ist. Durch die zentrische Anordnung des Kopfes 4 oberhalb des Schaftes 2 wird bei Aufbringung einer Kraft zur Eintreibung des Befestigungsmittels 1 in ein Bauteil das Auftreten von Biegemomenten verhindert, da die aus der Setzkraft resultierende Kraftrichtung mit der Ausrichtung des Schaftes 2 durch die zentrische Anordnung des Kopfes 4 in Übereinstimmung gebracht wird und die von der zentralen Anordnung des Schaftes beabstandet eingebrachten Kraftanteile beidseitig von der Biegelinie 6 sich gegenseitig aufheben. Um eine entsprechende zentrische Anordnung des Kopfes 4 zum Schaft 2 realisieren zu können, sind Einschnitte 7 insbesondere in der Verlängerung des Schaftes 2 an dem Kopf 4 vorgesehen, zwischen deren Endbereichen sich die zwischen Kopf 4 und Schaft 2 gebildete Biegelinie 6 erstreckt.

Der durch die Einschnitte 7 von dem Kopf 4 separierte Teil des Kopfes 4 bildet nach dem Umbiegen des Kopfes den Teil des Schaftes 2 direkt unterhalb des Kopfes 4. Daher kann durch Wahl des Verlaufs der Einschnitte 7 der die Außenkontur des unterhalb des Kopfes 4 angeordneten Teils des Schafts 2 oder aber auch die Kontur der Abschnitte 5 variabel gestaltet werden.

Das Befestigungsmittel 1 weist in diesem Ausführungsbeispiel nach dem Umbiegen des Kopfes 4 eine Aussparung 8 in dem Kopf 4 auf, deren Abmessungen durch die Biegelinie 6 und die Ausbildung der Einschnitte 7 definiert sind. Die Kontur der Aussparung 8 entspricht demnach der Außenkontur des Schaftes 2 im Bereich unterhalb des Kopfes 4. Das Befestigungsmittel 1 ist aus Stahl, insbesondere aus einem Baustahl gefertigt. In diesem Ausführungsbeispiel ist der Schaft 2 geschlitzt ausgeführt und weist eine entsprechende Öffnung 9 auf. Ferner sind am Schaft 2 Vorsprünge 10 in Form von Verzahnungen ausgebildet, um die Auszugswerte des Befestigungsmittels 1 zu erhöhen.

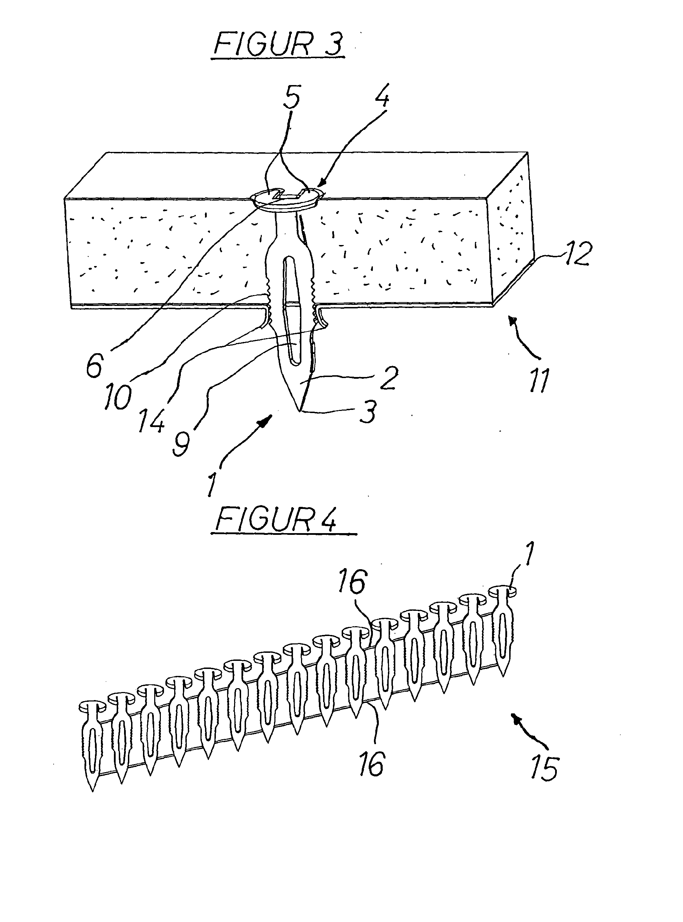

Die Figur 3 zeigt ein erfindungsgemäßes Befestigungsmittel 1, welches in ein im Trockenbau übliches Profil hier in der Form einer an einem Blech 12 befestigten Gipskartonplatte 11 eingebracht ist. Bei der Herstellung des Befestigungsmittels 1 wurde die Stanz- bzw. Schneidlinie des Stanz- bzw. Schneidwerkzeuges so gewählt, dass der Kopf 4 zur Vermeidung einer Beschädigung der bei Gipskartonplatten 12 vorgesehenen Papieroberfläche beim Einbringen des Befestigungsmittels 1 im Bereich des aufliegenden Kopfes 4 durchtrennt wird oder einreißt und die Papieroberfläche statt dessen unterhalb des Kopfes 4 eingezogen wird.

Das Befestigungsmittel 1 ist in diesem Ausführungsbeispiel so ausgebildet, dass es auf dem Prinzip eines Spannstiftes gemäß DIN 1481 beruht. Der Durchmesser des Befestigungsmittels 1 ist hier so gewählt, dass er ein Übermaß bezogen auf die im Vorfeld in das Bauteil eingebrachte Bohrung aufweist. Beim Eintreiben des Befestigungsmittels 1 wird der Schaft 2 zusammengedrückt, wodurch sich sein Durchmesser zunächst der Bohrung in der Gipskartonplatte 11 anpasst. Durch die Rückstellkraft des Schaftes 2 stellt sich im Anschluss eine Presspassung zwischen Schaft 2 und Wandungen der Bohrung in der Gipskartonplatte 11 ein, wodurch die Auszugswerte des Befestigungsmittels 1 erhöht werden.

Die Spitze 3 ist in diesem Ausführungsbeispiel nicht angeschliffen, so dass von der Spitze 3 verdrängtes Material der Gipskartonplatte 11, sowie des Blechs 12 nicht wie im Stand der Technik üblich ausgestanzt wird, sondern das Blech 11 durch die Spitze 3 derart aufgeschnitten wird, dass der geschnittene Teil des Blechs 12 seitlich gebogen wird und sich die gebogenen Abschnitte 14 an den Schaft 2 anlehnt. Da sich das Blech 11 wie hier dargestellt federnd gegen die Verzahnung 10 des Befestigungsmittels 1 anlegt, werden hierdurch die Auszugswerte des Befestigungsmittels 1 weiter erhöht.

Aufgrund des einfachen Aufbaus des erfindungsgemäßen Befestigungsmittels 1 ist es auch möglich, in einem einfachen einstufigen Produktionsprozess auch einen Nagelstreifen 15 vollständig herzustellen, der für den Einsatz eines Nagelsetzgerätes geeignet ist, da er sich einteilig aus einem flächigen Rohmaterial durch Stanzen und/oder Schneiden und Biegen aus mehreren, über durchtrennbare Stege 16 miteinander verbundene Befestigungsmittel 1 gebildet ist. Eine entsprechende Ausführungsform eines erfindungsgemäßen Nagelstreifens 15 mit mehreren über durchtrennbare Stege 16 miteinander verbundenen erfindungsgemäßen Befestigungsmittel 1 aus Stahl fertig magaziniert ist, zeigt Figur 4.

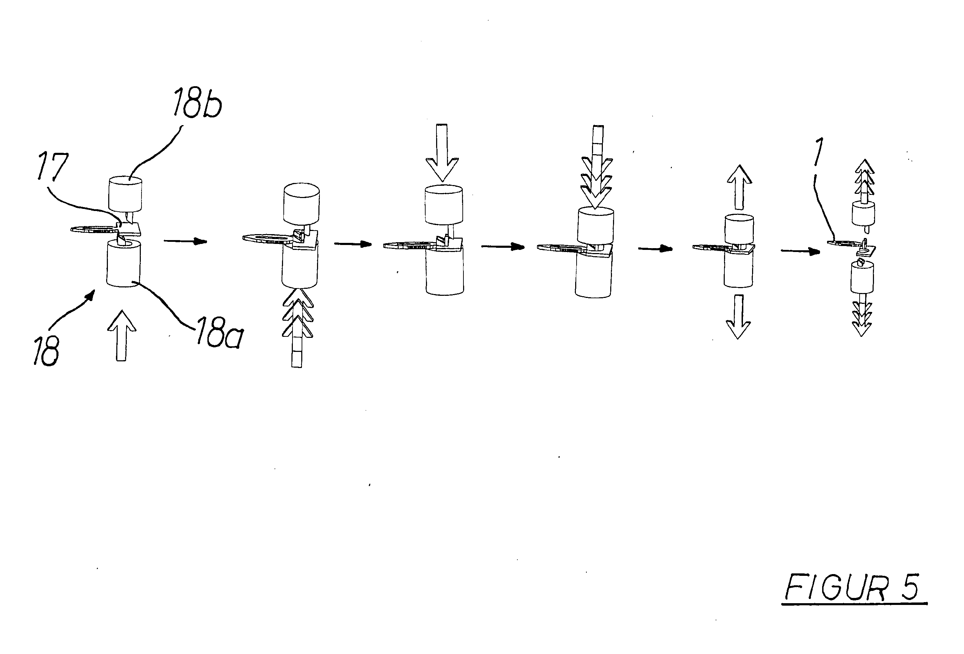

In Figur 5 ist die prinzipielle Herstellung eines erfindungsgemäßen Befestigungsmittels 1 schematisch dargestellt. Zunächst wird ein Rohling 17 in eine aus zwei Werkzeughälften 18a, 18b zusammengesetzte Stanz-Biegevorrichtung 18 eingesetzt. Der Rohling 17 ist hier so ausgestanzt, dass die Außenkontur des Befestigungsmittels 1 im Bereich des Schaftes 2 bereits vollständig ausgebildet ist. Lediglich der Bereich des Kopfes 4 ist noch nicht abschließend bearbeitet. Der Rohling 17 wurde aus einem Blech gestanzt. Um nun einen zentrisch oberhalb des Schaftes 2 angeordneten Kopf 4 zu fertigen, bewegt sich zunächst ein Unterwerkzeug 18a in Richtung des Kopfbereichs des Rohlings 17 und stanzt eine erste Hälfte des Kopfes 4 aus. Bei der Abwärtsbewegung des Werkzeugunterteils 18a werden die Einschnitte 7 in den Kopf 4 eingebracht und die Abschnitte 5 des Kopfes 4 gleichzeitig derart umgebogen, dass sich die ausgestanzten Abschnitte 5 des Kopfes 4 im Wesentlichen senkrecht zum Schaft 2 erstrecken.

Im nächsten Schritt setzt sich ein Werkzeugoberteil 18b in Bewegung und stanzt in der Abwärtsbewegung die zweite Hälfte des Kopfes 4 aus und biegt diesen ebenfalls zeitgleich nach unten.

Schließlich bewegen sich die Werkzeughälften 18a, 18b wieder auseinander, so dass fertiggestellte Befestigungsmittel 1 aus der Stanz-Biegevorrichtung 18 ausgeworfen werden kann.

Das fertige Befestigungselement 1 weist Abschnitte 5 des Kopfes 4 auf, die sich beidseitig einer beim Umbiegen des Kopfes zwischen den Endbereichen der Einschnitte 7 gebildeten Biegelinie 6 über den Schaft 2 vorstehen. Der Kopf 4 ist wunschgemäß nach dem Umbiegen zentrisch zum Schaft 2 angeordnet. Dazu werden die Einschnitte 7 parallel zu den Seitenflächen des Schaftes 2 in den Bereich des Kopfes 4 eingebracht und erstrecken sich dabei von der äußeren Begrenzung des Kopfes 4 bis zu einer durch diese flächige Erstreckung des Schaftes 2 gebildete Mittellinie hin.

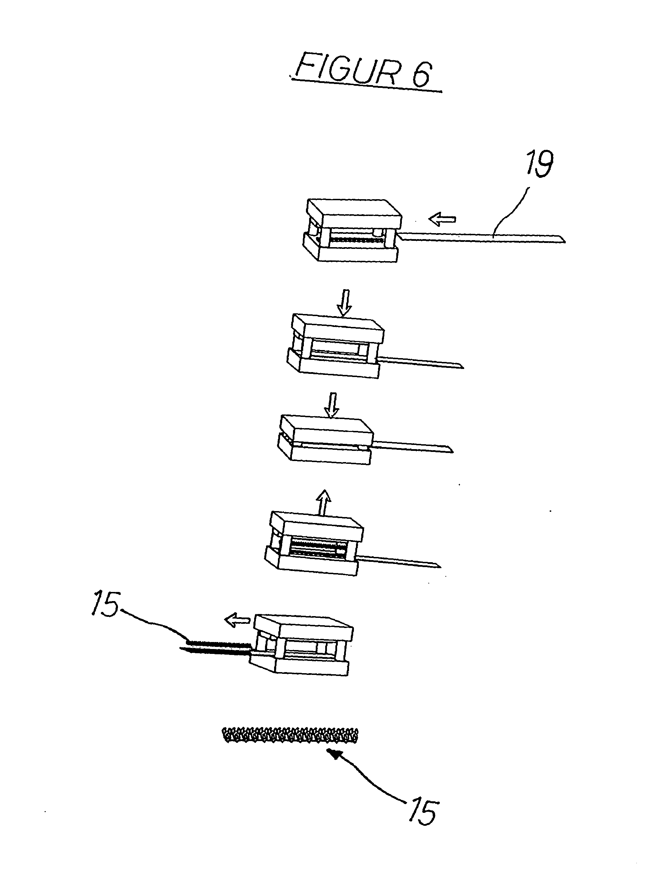

Die Figur 6 zeigt schließlich einen in einem einstufigen Verfahren hergestellten Nagelstreifen 15 mit mehreren über Stege 16 miteinander verbundenen und in Position gehaltenen erfindungsgemäßen Befestigungsmitteln 1, welcher geeignet ist, in einer Nagelsetzmaschine eingesetzt zu werden.

Zur Herstellung des Nagelstreifens wird zunächst ein Blechstreifen 19 in die Stanz-Biegevorrichtung 18 eingeführt. Anschließend wird das Oberwerkzeug 18a in Richtung des Unterwerkzeuges 18b bewegt, wodurch aus dem Blech 19 die Außenkonturen mehrerer Befestigungsmittel 1 sowie die Befestigungsmittel 1 verbindenden Stege 16 ausgestanzt bzw. ausgeschnitten. Gleichzeitig werden Einschnitte 7 in die jeweiligen Befestigungsmittel 1 insbesondere in Verlängerung der Außenkonturen der jeweiligen Schäfte 2 in die Befestigungsmittel 1 eingebracht. Während des Einbringens der Einschnitte 7 werden die Köpfe 4 gleichzeitig derart umgebogen, dass sie sich im Wesentlichen senkrecht zu den Schäften 2 erstrecken. Die Köpfe 4 sind so angeordnet, dass sich deren Abschnitte 5 jeweils beidseitig der beim Umbiegen der Köpfe 4 zwischen den Endbereichen der Einschnitte 7 gebildeten Biegelinie 6 über die Schäfte 2 vorstehen.

Schließlich wird das obere Werkzeug 18a wieder angehoben, so dass der fertig aus Stahl magazinierte Nagelstreifen 15 auf einfache Weise ausgeworfen werden kann und bereits in einer Form vorliegt, in der er uneingeschränkt zur Verwendung in einer Nagelsetzmaschine einsetzbar ist.

Alternativ kann der Stanz-/Schneidvorgang und der Biegevorgang auch aufeinanderfolgend in zwei Verfahrensschritten oder aber auch in zwei voneinander getrennten Vorrichtungen erfolgen.

## Patentansprüche

1. Befestigungsmittel (1), insbesondere Nagel zum Einsatz im Trockenbau, das einteilig aus einem flächigen Rohmaterial durch Stanzen und/oder Schneiden und Biegen gebildet ist, mit einem Schaft (2), an dessen einem Endbereich eine Spitze (3) und an dessen anderem Endbereich ein im wesentlichen senkrecht zur flächigen Erstreckung des Schaftes (2) umgebogener Kopf (4) ausgebildet sind, **dadurch gekennzeichnet, dass** Abschnitte (5) des Kopfes (4) beidseitig einer beim Umbiegen des Kopfes (4) gebildeten Biegelinie (6) über den Schaft (2) vorstehen.

2. Befestigungsmittel (1) nach Anspruch 1, **dadurch gekennzeichnet, dass** der Kopf (4) so ausgebildet ist, dass er sowohl beidseitig der flächigen Erstreckung des Schaftes (2) als auch quer dazu über den Schaft (2) vorsteht.

3. Befestigungsmittel (1) nach Anspruch 1 oder 2, **dadurch gekennzeichnet, dass** der Kopf (4) eine im Wesentlichen kreisförmige Querschnittsfläche aufweist, die zentrisch zum Schaft (2) angeordnet ist.

4. Befestigungsmittel (1) nach einem der Ansprüche 1 bis 3, **dadurch gekennzeichnet, dass** Einschnitte (7) insbesondere in der Verlängerung des Schaftes (2) an dem Kopf (4) vorgesehen sind, zwischen deren Endbereichen sich die Biegelinie (6) erstreckt.

5. Befestigungsmittel (1) nach Anspruch 4, **dadurch gekennzeichnet, dass** eine Aussparung (8) in dem Kopf (4) ausgebildet ist, deren Abmessungen durch die Biegelinie (6) und die Ausbildung der Einschnitte (7) definiert sind.

6. Befestigungsmittel (1) nach Anspruch 5, **dadurch gekennzeichnet, dass** die Kontur der Aussparung (8) im Wesentlichen der Außenkontur zumindest eines Abschnittes des Schaftes (2) im Bereich unterhalb des Kopfes (4) entspricht.

7. Befestigungsmittel (1) nach der vorhergehenden Ansprüche, **dadurch gekennzeichnet, dass** ein Endbereich mindestens eines Abschnittes (5) des Kopfes (4) eine weitere Biegelinie aufeist, um die der Endbereich relativ zum Kopf (4) gebogen ist.

8. Befestigungsmittel (1) nach der vorhergehenden Ansprüche, **dadurch gekennzeichnet, dass** der Kopf (4) zur Vermeidung einer Beschädigung einer dem Kopf (4) zugewandten Bauteiloberfläche eines mit dem Befestigungsmittel (1) zu bestückenden Bauteils abgeschrägt ausgebildet ist.

9. Nagelstreifen (15) für ein Nagelsetzgerät, der einteilig aus einem flächigen Rohmaterial (19) durch Stanzen und/oder Schneiden und Biegen aus mehreren, über mindestens einen durchtrennbaren Steg (16) miteinander verbundenen Befestigungsmitteln (1) nach einem der Ansprüche 1 bis 8 gebildet ist.

10. Verfahren zur Herstellung eines Befestigungsmittels (1), insbesondere eines Nagels nach einem der Ansprüche 1 bis 8, mit einem Schaft (2) an dessen einem Endbereich eine Spitze (3) und an dessen anderem Endbereich ein im wesentlichen senkrecht zur flächigen Erstreckung des Schaftes (2) umgebogener Kopf (4) ausgebildet sind, wobei das Befestigungsmittel (1) einstückig aus einem flächigen Rohmaterial (19) gebildet wird, indem
eine Außenkontur des Befestigungsmittels (1) aus dem flächigen Rohmaterial (19) ausgestanzt/ausgeschnitten wird;
Einschnitte (7) insbesondere in Verlängerung zur Außenkontur des Schaftes (2) in das Befestigungsmittel (11) eingebracht werden;
das Befestigungsmittel (1) im Bereich der Einschnitte (7) nach oder während des Einbringens der Einschnitte (7) derart umgebogen wird, dass sich der Kopf (4) im wesentlichen senkrecht zum Schaft (2) erstreckt, wobei Abschnitte (5) des Kopfes (4) beidseitig einer beim Umbiegen des Kopfes (4) zwischen Endbereichen der Einschnitte (7) gebildeten Biegelinie (6) über den Schaft (2) vorstehen.

11. Verfahren nach Anspruch 10, **dadurch gekennzeichnet, dass** die Einschnitte (7) so eingebracht werden, dass sich der Kopf (4) nach dem Umbiegen zentrisch zum Schaft (2) erstreckt.

12. Verfahren zur Herstellung eines Nagelstreifens (15), insbesondere für den Trockenbau, aus mehreren Befestigungsmitteln (1) insbesondere nach einem der Ansprüche 1 bis 8, die jeweils einen Schaft (2) aufweisen, an dessen einem Endbereich eine Spitze (3) und an dessen anderem Endbereich ein im Wesentlichen senkrecht zur flächigen Erstreckung des Schaftes (2) umgebogener Kopf (4) ausgebildet sind, und über mindestens einen Befestigungssteg (16) miteinander verbunden sind, wobei der Nagelstreifen (15) einstückig aus einem flächigen Rohmaterial (19) gebildet wird, indem
eine Außenkontur der über die Stege (16) miteinander verbundenen Befestigungsmittel (1) aus dem flächigen Rohmaterial (19) ausgestanzt/ausgeschnitten wird;
Einschnitte (7) insbesondere in Verlängerung zur Außenkontur der jeweiligen Schäfte (2) in die Befestigungsmittel (1) eingebracht werden;
die Befestigungsmittel (1) im Bereich der Einschnitte (7) nach oder während des Einbringens der Einschnitte (7) derart umgebogen werden, dass sich die Köpfe (4) jeweils im wesentlichen senkrecht zu den Schäften (2) erstrecken, wobei Abschnitte (5) der Köpfe (4) jeweils beidseitig einer beim Umbiegen der Köpfe (4) zwischen Endbereichen der Einschnitte (7) gebildeten Biegelinie (6) über die Schäfte (2) vorstehen.

13. Verfahren nach Anspruch 12, **dadurch gekennzeichnet, dass** die Einschnitte (7) so eingebracht werden, dass sich die Köpfe (4) nach dem Umbiegen jeweils zentrisch zu den Schäften (2) erstrecken.

## Geänderte Patentansprüche

### Geänderte Patentansprüche gemäss Regel 137(2) EPÜ.

**1.** Nagelstreifen (15) für ein Nagelsetzgerät, mit mehreren Befestigungsmitteln (1), insbesondere Nägeln zum Einsatz im Trockenbau, die jeweils einen Schaft (2) aufweisen, an dessen einem Endbereich eine Spitze (3) und an dessen anderem Endbereich ein im wesentlichen senkrecht zur flächigen Erstreckung des Schaftes (2) umgebogener Kopf (4) ausgebildet sind, wobei Abschnitte (5) des Kopfes (4) beidseitig einer beim Umbiegen des Kopfes (4) gebildeten Biegelinie (6) über den Schaft (2) vorstehen, **dadurch gekennzeichnet, dass** er einteilig aus einem flächigen Rohmaterial (19) durch Stanzen und/oder Schneiden und Biegen gebildet ist, wobei die Befestigungsmittel jeweils über mindestens einen durchtrennbaren Steg (16) miteinander verbunden sind.

**2.** Nagelstreifen nach Anspruch 1, **dadurch gekennzeichnet, dass** die Köpfe (4) so ausgebildet sind, dass sie sowohl beidseitig der flächigen Erstreckung des Schaftes (2) als auch quer dazu über den Schaft (2) vorstehen.

**3.** Nagelstreifen nach Anspruch 1 oder 2, **dadurch gekennzeichnet, dass** die Köpfe (4) jeweils eine im Wesentlichen kreisförmige Querschnittsfläche aufweisen, die zentrisch zum Schaft (2) angeordnet ist.

**4.** Nagelstreifen nach einem der Ansprüche 1 bis 3, **dadurch gekennzeichnet, dass** Einschnitte (7) insbesondere in der Verlängerung des Schaftes (2) an den Köpfen (4) vorgesehen sind, wobei sich zwischen den Endbereichen jeweils die Biegelinie (6) erstreckt.

**5.** Nagelstreifen nach Anspruch 4, **dadurch gekennzeichnet, dass** jeweils eine Aussparung (8) in dem Kopf (4) ausgebildet ist, deren Abmessungen durch die Biegelinie (6) und die Ausbildung der Einschnitte (7) definiert sind.

**6.** Nagelstreifen nach Anspruch 5, **dadurch gekennzeichnet, dass** die Kontur der Aussparung (8) im Wesentlichen der Außenkontur zumindest eines Abschnittes des Schaftes (2) im Bereich unterhalb des jeweiligen Kopfes (4) entspricht.

**7.** Nagelstreifen nach der vorhergehenden Ansprüche, **dadurch gekennzeichnet, dass** ein Endbereich mindestens eines Abschnittes (5) mindestens eines der Köpfe (4) eine weitere Biegelinie aufweist, um die der Endbereich relativ zum Kopf (4) gebogen ist.

**8.** Nagelstreifen nach der vorhergehenden Ansprüche, **dadurch gekennzeichnet, dass** die Köpfe (4) zur Vermeidung einer Beschädigung einer den Köpfen (4) zugewandten Bauteiloberfläche eines mit einem Befestigungsmittel (1) zu bestückenden Bauteils abgeschrägt ausgebildet ist.

**9.** Verfahren zur Herstellung eines Nagelstreifens (15), insbesondere für den Trockenbau, aus mehreren Befestigungsmitteln (1) insbesondere nach einem der Ansprüche 1 bis 8, die jeweils einen Schaft (2) aufweisen, an dessen einem Endbereich eine Spitze (3) und an dessen anderem Endbereich ein im Wesentlichen senkrecht zur flächigen Erstreckung des Schaftes (2) umgebogener Kopf (4) ausgebildet sind, und über mindestens einen Befestigungssteg (16) miteinander verbunden sind, wobei der Nagelstreifen (15) einstückig aus einem flächigen Rohmaterial (19) gebildet wird, indem
eine Außenkontur der über die Stege (16) miteinander verbundenen Befestigungsmittel (1) aus dem flächigen Rohmaterial (19) ausgestanzt/ausgeschnitten wird;
Einschnitte (7) insbesondere in Verlängerung zur Außenkontur der jeweiligen Schäfte (2) in die Befestigungsmittel (1) eingebracht werden;
die Befestigungsmittel (1) im Bereich der Einschnitte (7) nach oder während des Einbringens der Einschnitte (7) derart umgebogen werden, dass sich die Köpfe (4) jeweils im wesentlichen senkrecht zu den Schäften (2) erstrecken, wobei Abschnitte (5) der Köpfe (4) jeweils beidseitig einer beim Umbiegen der Köpfe (4) zwischen Endbereichen der Einschnitte (7) gebildeten Biegelinie (6) über die Schäfte (2) vorstehen.

**10.** Verfahren nach Anspruch 12, **dadurch gekennzeichnet, dass** die Einschnitte (7) so eingebracht werden, dass sich die Köpfe (4) nach dem Umbiegen jeweils zentrisch zu den Schäften (2) erstrecken.
